# EUROPEAN PATENT APPLICATION

(11) **EP 4 683 065 A1**
(43) Date of publication of application: **21.01.2026**
(21) Application number: 24774504.5
(22) Date of filing: 13.02.2024
(51) Int. Cl.: H01M 50/204, H01M 50/202, H01M 50/213, H01M 50/342

(54) **BATTERY PACK AND METHOD FOR MANUFACTURING SAME**

(30) Priority: 17.03.2023 JP 2023043533
(71) Applicant: Panasonic Energy Co., Ltd., Moriguchi-shi, Osaka 570-8511 (JP)
(72) Inventor: TAKEDA, Kensaku, Osaka 571-0057 (JP)
(74) Representative: Eisenführ Speiser
(86) International application number: PCT/JP2024/004788
(87) International publication number: WO 2024/195358

(57) **Abstract**

Provided are a battery pack and a manufacturing method therefor, in which safety is enhanced without using an expensive flame-retardant fire-resistant cap. A battery pack 100 includes one or more secondary battery cells 1, an outer case 10 that stores the one or more secondary battery cells 1, and a flame-retardant material 30 interposed between the outer case 10 and an end face of a secondary battery cell 1. The flame-retardant material 30 is provided so that flame-retardant paper 31 is folded to cover the secondary battery cell 1 from an end face to a side face thereof and partially double-overlap at least the side face. This configuration in which the secondary battery cells 1 are covered by folding the inexpensive flame-retardant paper 31 can suppress leakage of flames to the outside of the outer case 10 even in the event that the secondary battery cells 1 catch fire.

## Description

### TECHNICAL FIELD

The present disclosure relates to a battery pack and a method for manufacturing the battery pack.

### BACKGROUND ART

A battery pack in which a large number of secondary battery cells are connected in series or in parallel is used as a power source for electric assist bicycles, a power supply for portable electric devices such as electric cleaners and electric tools, or as a stationary power storage such as a backup power supply for servers or a power supply device for households, business establishments, and factories, and furthermore, as a power supply for driving vehicles such as electric scooters, electric carts, hybrid vehicles, and electric vehicles, and the like. Such battery packs usually have a configuration in which a plurality of secondary battery cells are connected in series or in parallel and stored in an outer case (e.g., Patent Literature 1).

With the recent increase in output power of electrical and motorized devices, higher output and larger capacity are also required for battery packs. As a result, the number of secondary battery cells contained in a battery pack tends to increase. Each secondary battery cell is provided with a gas discharge port that opens to release internal gas in the event of an abnormality causing an internal pressure increase. The gas discharge port is generally provided on the end face on the positive electrode side of the secondary battery cell. When high-temperature and high-pressure gas is released from the gas discharge port and combustion of oxygen leads to flame generation, it is required that the flame be prevented from exiting the outer case.

To provide such a fire-resistant structure, there is a proposed configuration that provides protection using a cap-shaped fire-resistant structure for covering the positive electrode face of the secondary battery cell as well as the side face surrounding and facing the positive electrode face. With this configuration, even if thermal energy released from the positive electrode face is reflected and directed toward the side face, it is possible to avoid a situation in which the thermal energy breaks through the outer case and is released to the outside.

However, such a fire-resistant cap needs to be formed from a resin with high fire resistance, leading to a problem of higher costs associated with expenses for mold and molding processes.

### CITATION LIST

### PATENT LITERATURE

Patent Literature 1: Japanese Unexamined Patent Application Publication No. 2022-101813

### SUMMARY OF INVENTION

### TECHNICAL PROBLEM

One object of the present disclosure is to provide a battery pack and a method for manufacturing the battery pack, in which safety is enhanced without using an expensive flame-retardant fire-resistant cap.

### SOLUTION TO PROBLEM

In order to achieve the above object, a battery pack according to one embodiment of the present disclosure includes one or more secondary battery cells, an outer case that stores the one or more secondary battery cells, and a flame-retardant material interposed between the outer case and an end face of a secondary battery cell. The flame-retardant material is provided so that flame-retardant paper is folded to cover the secondary battery cell from an end face to a side face thereof and partially double-overlap at least the side face.

Further, a method for manufacturing a battery pack according to another embodiment is a method for manufacturing a battery pack that includes one or more secondary battery cells, and an outer case that stores the one or more secondary battery cells. The method includes a step of folding flame-retardant paper to cover one of the one or more secondary battery cells from an end face to a side face thereof and partially double-overlap at least the side face, and a step of storing the one or more secondary battery cells in the outer case.

### ADVANTAGEOUS EFFECTS OF INVENTION

According to the battery pack according to one embodiment of the present disclosure, without using an expensive flame-retardant fire-resistant resin cap, inexpensive flame-retardant paper is folded to cover the secondary battery cell, so that leakage of flames to the outside of the outer case can be suppressed even in the event that the secondary battery cell catches fire.

### BRIEF DESCRIPTION OF DRAWINGS

FIG. 1 is a partially-transparent perspective view of a battery pack according to Embodiment 1;
FIG. 2 is an exploded perspective view of the battery pack of FIG. 1;
FIG. 3 is a perspective view of flame-retardant paper of FIG. 2 viewed from the back;
FIG. 4 is a perspective view showing a folding method for the flame-retardant paper of FIG. 3;
FIG. 5 is an unfolded view of the flame-retardant paper of FIG. 4;
FIG. 6 is a schematic cross-sectional view showing a state of spark generation in a conventional battery pack;
FIG. 7 is a perspective view of a battery pack including a fire-resistant cap according to Comparative Example 1;
FIG. 8 is an exploded perspective view of the battery pack of FIG. 7;
FIG. 9 is a perspective view of a battery pack according to Comparative Example 2;
FIG. 10 is an unfolded view of a flame-retardant material of FIG. 9;
FIG. 11 is a partially-transparent perspective view of a battery pack according to Embodiment 2;
FIG. 12 is an exploded perspective view showing a state where a secondary battery cell is covered with flame-retardant paper in a battery pack according to Embodiment 3;
FIG. 13 is an unfolded view of the flame-retardant paper of FIG. 12;
FIG. 14 is a perspective view of a battery pack according to Embodiment 4;
FIG. 15 is an exploded perspective view of the battery pack of FIG. 14;
FIG. 16 is an exploded perspective view of the battery pack of FIG. 15 viewed from the back;
FIG. 17 is a perspective view showing a folding method for the flame-retardant paper of FIG. 16; and
FIG. 18 is an exploded perspective view of a battery pack according to Embodiment 5.

### DESCRIPTION OF EMBODIMENTS

The embodiments of the present disclosure may be specified by the following configurations and features.

A battery pack according to another embodiment of the present disclosure is as recited in the preceding embodiment, wherein the flame-retardant paper protects at least a corner between the end face and the side face of the secondary battery cell with two or more overlapping layers.

A battery pack according to another embodiment of the present disclosure is as recited in any preceding embodiments, wherein the flame-retardant paper is folded into a flame-retardant material having a bottom and side faces with one end opened, and no gaps are present at least between the side faces of the flame-retardant material. With this configuration, a situation of leakage of flames or the like from the cuts can be avoided.

A battery pack according to another embodiment of the present disclosure is as recited in any preceding embodiments, wherein the flame-retardant paper protects the side face of the secondary battery cell with three overlapping layers at least partially. This configuration improves fire-resistance performance with the three overlapping layers of flame-retardant paper, thereby enhancing safety.

A battery pack according to still another embodiment of the present disclosure is as recited in any preceding embodiments, wherein the secondary battery cell includes a gas discharge port, which opens in response to an increase in internal pressure, at least on one end face.

A battery pack according to still another embodiment of the present disclosure is as recited in any preceding embodiments, wherein the secondary battery cell includes the gas discharge port on a positive electrode side, and the flame-retardant paper covers an end face on the positive electrode side of the secondary battery cell. With this configuration, the positive electrode side that may catch fire can be effectively protected.

A battery pack according to still another embodiment of the present disclosure is as recited in any preceding embodiments, wherein the flame-retardant paper is adhered to an inner face of the outer case.

A battery pack according to still another embodiment of the present disclosure is as recited in any preceding embodiments, wherein each of the one or more secondary battery cells has a cylindrical outer can.

A method for manufacturing a battery pack according to still another embodiment of the present disclosure is as recited in any preceding embodiments, wherein the flame-retardant paper has a sheet shape with no cuts at least at each corner between the end face and the side face of the secondary battery cell in an unfolded state.

Embodiments of the present disclosure are described below with reference to the drawings. However, the embodiments shown below are only examples to illustrate the technical concepts of the present disclosure, and the present disclosure is not limited to these embodiments. Further, this specification does not limit any member in the claims to the members described in the embodiments. In particular, the dimensions, materials, shapes, relative positions, etc. of the components described in these embodiments are not intended to limit the scope of the present disclosure unless particularly otherwise specified, and are merely illustrative. It should be noted that the sizes, positional relationships, etc. of the members shown in the drawings may be exaggerated for clarity in the description. Furthermore, in the following description, the same names and reference numbers indicate the same or similar members, and detailed descriptions are omitted as appropriate. Furthermore, each element constituting the present disclosure may have an aspect in which a plurality of elements is formed from the same member and a single member serves as a plurality of elements; conversely, a function of a single member can also be implemented by being shared among a plurality of members.

The battery pack of the present disclosure may be used as a power supply for portable electric devices such as electric cleaners and electric tools, or as a stationary power storage such as a backup power supply for servers or a power supply device for households, business establishments, and factories, and furthermore, as a power source for driving electric assist bicycles, a power supply for driving vehicles such as electric scooters, electric carts, hybrid vehicles, and electric vehicles, and the like. A battery pack for use in an assist bicycle is described below as one embodiment of the present disclosure.

### [EMBODIMENT 1]

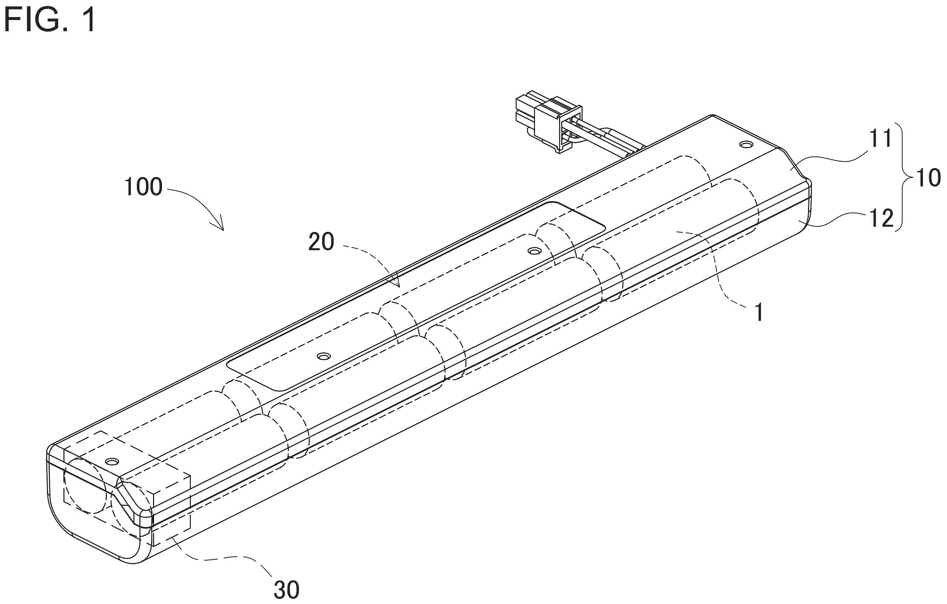

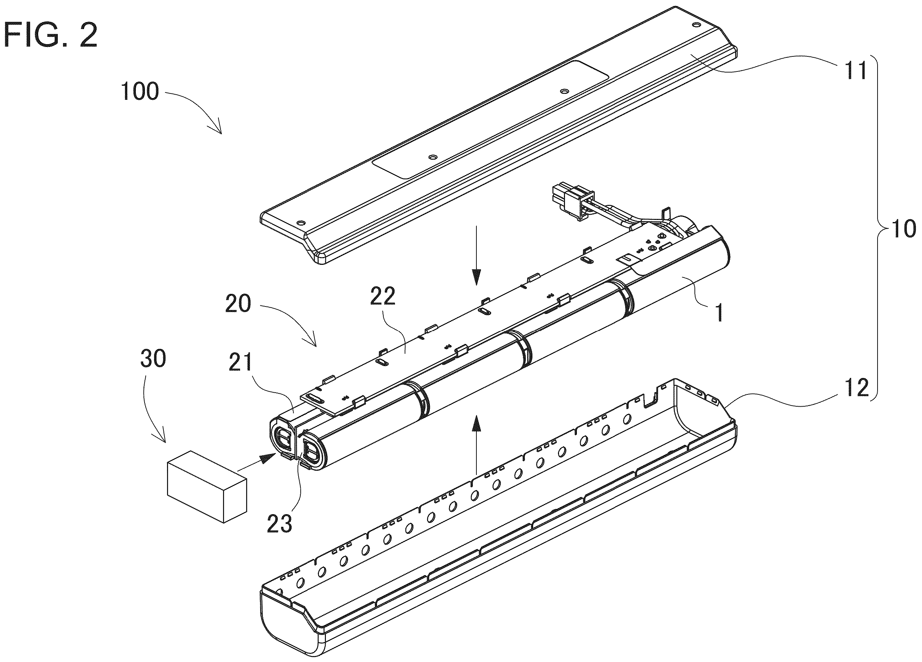

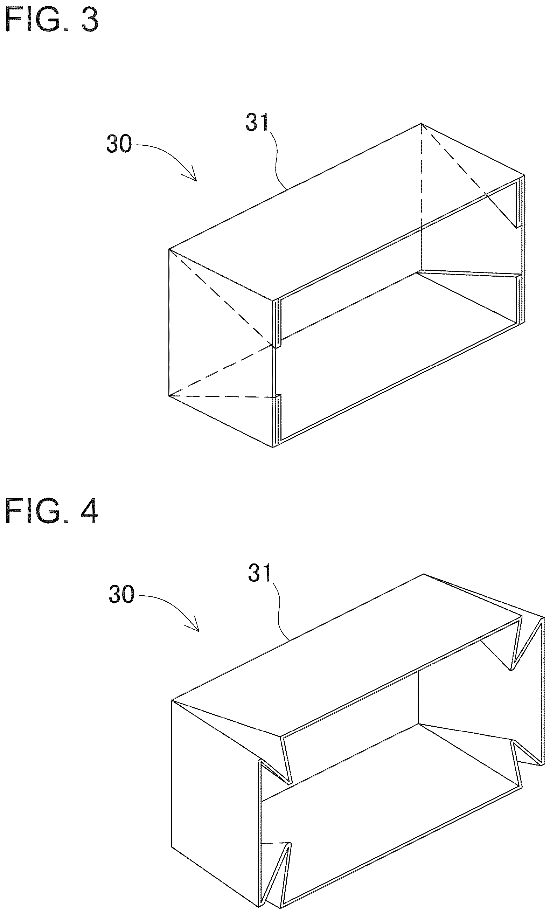

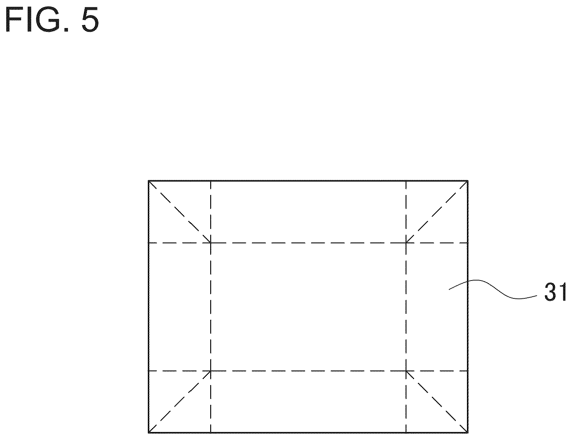

FIGs. 1 to 5 illustrate a battery pack 100 according to Embodiment 1 of the present disclosure. In these figures, FIG. 1 is a partially-transparent perspective view of a battery pack 100 according to Embodiment 1, FIG. 2 is an exploded perspective view of the battery pack 100 of FIG. 1, FIG. 3 is a perspective view of flame-retardant paper 31 of FIG. 2 viewed from the back, FIG. 4 is a perspective view showing a folding method for the flame-retardant paper 31 of FIG. 3, and FIG. 5 is an unfolded view of the flame-retardant paper 31 of FIG. 4. The battery pack 100 shown in these figures includes an outer case 10, a battery module 20, and a flame-retardant material 30.

### (Outer Case 10)

The outer case 10 defines an internal storage space for storing the battery module 20 and the flame-retardant material 30. In the example of FIG. 1, the outer case 10 has a rod-like exterior extending in one direction. However, the exterior of the outer case 10 can be changed as appropriate according to the shape of the battery module 20 to be stored, in particular, according to the number and arrangement of the secondary battery cells 1. Further, the inner face of the outer case 10 may be formed into a curved plane along the surface of the outer can of the secondary battery cell 1.

In the example of FIG. 2, the outer case 10 is vertically divided into an upper case 11 and a lower case 12, and a storage space is defined between the upper case 11 and the lower case 12. The method of dividing the outer case 10 is also not limited to this configuration; for example, the outer case 10 may be divided into front and rear cases along the longitudinal direction, or may also be divided into three or more portions. The outer case 10 thus including divided portions has a hollow interior, which serves as a storage space for storing the battery module 20. Such an outer case 10 can be formed from a material having excellent insulating properties, for example, a resin such as polycarbonate or ABS.

### (Battery Module 20)

The battery module 20 includes one or more secondary battery cells 1, a battery holder 21 that holds the secondary battery cells 1, and a circuit board 22. In the example of FIG. 2, the battery module 20 is configured by arranging two rows of cylindrical secondary battery cells 1, each row having four secondary battery cells 1 connected in the longitudinal direction. However, in the present disclosure, the number or arrangement of the secondary battery cells are not limited to those in the above configuration. For example, the number of secondary battery cells per row may be three or fewer, or five or more. Further, the number of rows may be three or more. Furthermore, the secondary battery cells may be vertically stacked in multiple layers.

### (Secondary Battery Cell 1)

Each secondary battery cell 1 is a cylindrical secondary battery cell having a cylindrical outer can. The cylindrical secondary battery cell has terminal faces on both end faces. One of the terminal faces is provided with a gas discharge port. The gas discharge port is a member that opens when the internal pressure of the outer can increases, allowing the internal gas to be released. For such a gas discharge port, a restorable member, such as a gas discharge valve that opens in response to increased internal pressure and closes at a certain pressure, or a non-restorable member that opens as it ruptures by the internal pressure may be used as appropriate. Although the gas discharge port is usually provided on the positive electrode side, the present disclosure does not limit the position where the gas discharge port is provided to the positive electrode side, and the gas discharge port may be provided at another position, such as on the negative electrode side.

Cylindrical lithium-ion secondary batteries can be suitably used for such a secondary battery cell 1. However, for the battery pack of the present disclosure, the secondary battery cell 1 is not limited to a cylindrical battery and also not limited to a lithium-ion secondary battery. Any rechargeable battery can be used as the secondary battery cell 1, including, for example, nickel-metal hydride batteries and nickel-cadmium batteries.

As shown in FIG. 2, the battery holder 21 is a member for covering the side faces of the cylindrical secondary battery cells 1 and holding the secondary battery cells 1 in fixed positions. Such a battery holder 21 is preferably made of a resin having excellent insulating properties. For example, the battery folder 21 may be made of a thermoplastic resin, specifically, at least one of polycarbonate, polypropylene, polybutylene terephthalate, modified polyphenylene ether, ABS, and PPS. Further, in a state where the secondary battery cells 1 are held in the battery holder 21, the electrodes on the end faces of the respective secondary battery cells 1 are connected in series or in parallel by lead plates 23. Each lead plate 23 is formed by bending a metal plate. Each lead plate 23 is formed of a metal plate such as a nickel plate that has excellent conductivity. In the example of FIG. 2, eight secondary battery cells 1 are connected in a 4-series 2-parallel configuration. However, the number of the secondary battery cells 1 connected in series or in parallel can be appropriately designed according to the required output and capacity.

Each secondary battery cell 1 is connected to the circuit board 22 via each lead plate 23. The circuit board 22 includes, for example, a charging/discharging circuit that performs charging and discharging of the secondary battery cells 1, and a protection circuit that monitors the voltage and temperature of the secondary battery cells 1 and shuts off the current if abnormality occurs. The circuit board 22 is formed from a glass epoxy board or the like. Further, if necessary, a board holder for storing the circuit board may be provided, and the board holder may be secured to the battery module.

### (Flame-Retardant Material 30)

The flame-retardant material 30 is interposed between the outer case 10 and an end face of the secondary battery cell 1. The flame-retardant material 30 is formed of the flame-retardant paper 31 that is flexible and foldable. As shown in FIGs. 3 to 5, the flame-retardant paper 31 is folded into a box to form the flame-retardant material 30. In FIG. 5, the dashed lines indicate folding lines for folding the flame-retardant paper 31. The flame-retardant material 30 covers the secondary battery cell 1 from an end face to a side face thereof. The flame-retardant paper 31 is folded without any cuts and partially double-overlaps at least a side face. With this configuration, instead of using the expensive flame-retardant fire-resistant resin cap, the inexpensive flame-retardant paper 31 is folded to cover the secondary battery cells, which can suppress leakage of flames to the outside of the outer case 10 even in the event that the secondary battery cells 1 catch fire.

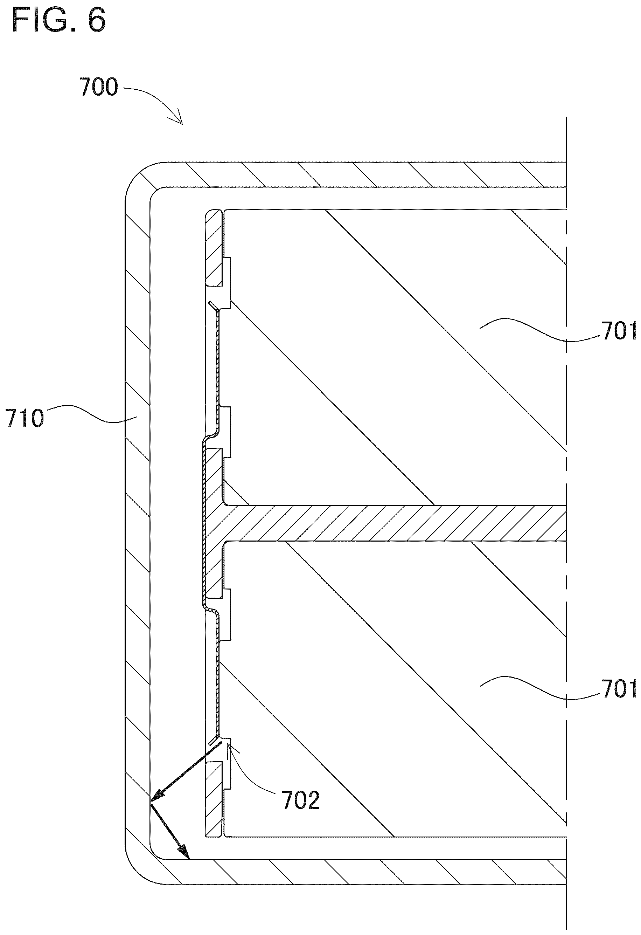

In battery packs, end faces are covered to prevent flames from leaking outside from the outer can in the event that flames are accidentally released from the end portion due to some abnormality in the secondary battery cell. However, as in a battery pack 700 shown in the schematic cross-sectional view of FIG. 6, a situation is considered in which flames released from a gas discharge port 702 on an end face of a secondary battery cell 701 are reflected by the inner face of an outer case 710, bounce back toward the side face, and rupture the outer case 710 in that area.

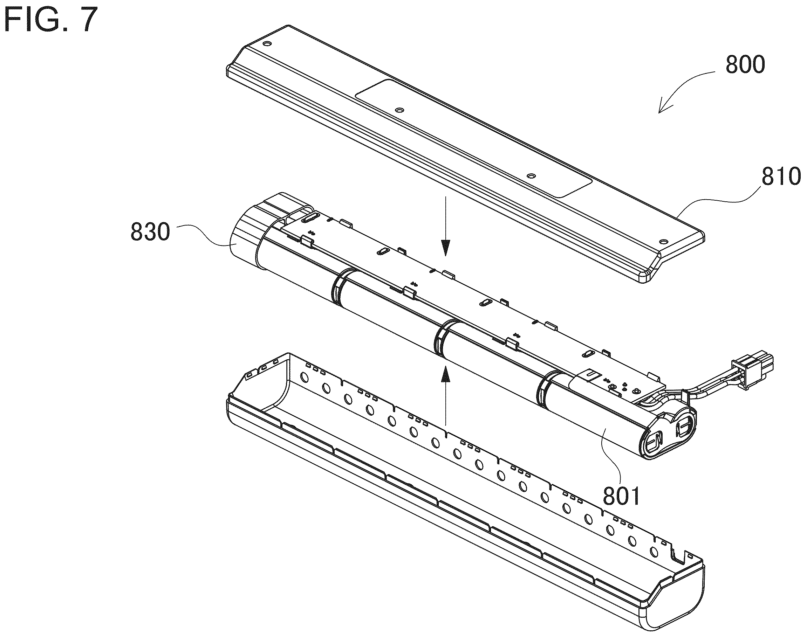

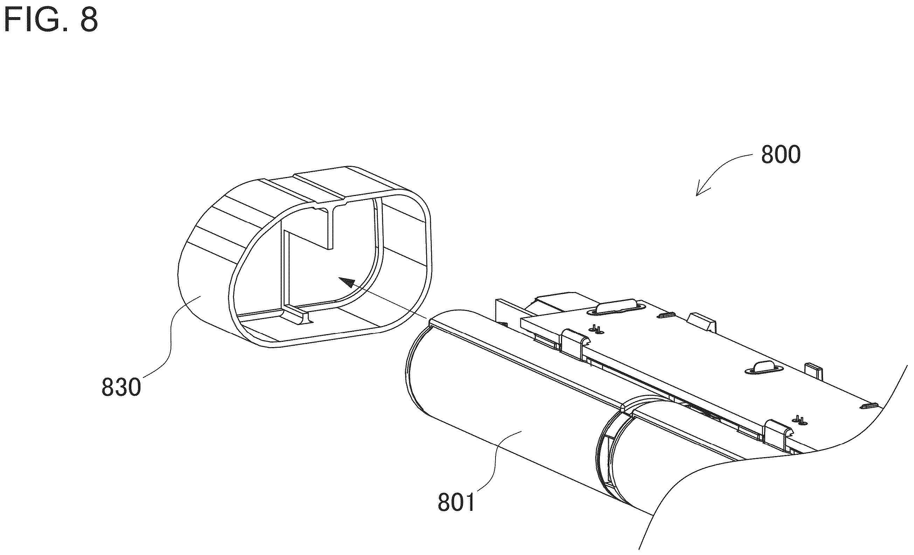

To prevent this, as in a battery pack 800 according to Comparative Example 1 shown in the perspective view of FIG. 7 and the exploded perspective view of FIG. 8, it is considered that a fire-resistant cap 830 formed of fire-resistant resin is used to cover not only the end portion of a secondary battery cell 801 but also the region extending from the end portion to the side face to protect an outer case 810. However, this configuration requires costs such as expenses for mold and molding processes for forming the fire-resistant cap 830. In addition, the fire-resistant cap 830 has a certain thickness, which leads to an increase in the size of the battery pack. Furthermore, the weight also increases, which is a drawback for mobile bodies and the like that require weight reduction.

In contrast, in the battery pack 100 according to Embodiment 1, the flame-retardant material 30 is formed from the inexpensive flame-retardant paper 31, and the secondary battery cell 1 are covered from the end face to the side face thereof with the flame-retardant paper 31 without any cuts, and at least a part of the side face is double-folded, thereby improving flame retardance and enhancing safety. By thus partially folding and overlapping the flame-retardant paper 31, the fire-resistance performance can be enhanced in proportion to the overlapping layers, even though only a single sheet of the flame-retardant paper 31 is used.

The flame-retardant paper 31 protects at least the corners between the end face and the side face of the secondary battery cell 1 with two or more overlapping layers. This makes it easy to improve the flame retardance of the flame-retardant material 30 formed from the flame-retardant paper 31. Preferably, the side face of the secondary battery cell 1 is protected with three overlapping layers of the flame-retardant paper 31, at least partially. This three-layered structure of the flame-retardant paper 31 can further improve the fire-resistance performance and enhances safety. In the example of FIG. 3, in the flame-retardant material 30, the flame-retardant paper 31 is formed into triangular three overlapping layers along the boundary between the side faces, starting from the corner between the end face and the side face of the secondary battery cell 1. In particular, as shown in FIGs. 4 and 5, a single rectangular flame-retardant paper 31 is formed into a box by folding its corners in the manner of "origami". This creates a three-layered region at each corner. Utilizing this three-layered region to enhance the flame retardance may contribute to improved reliability.

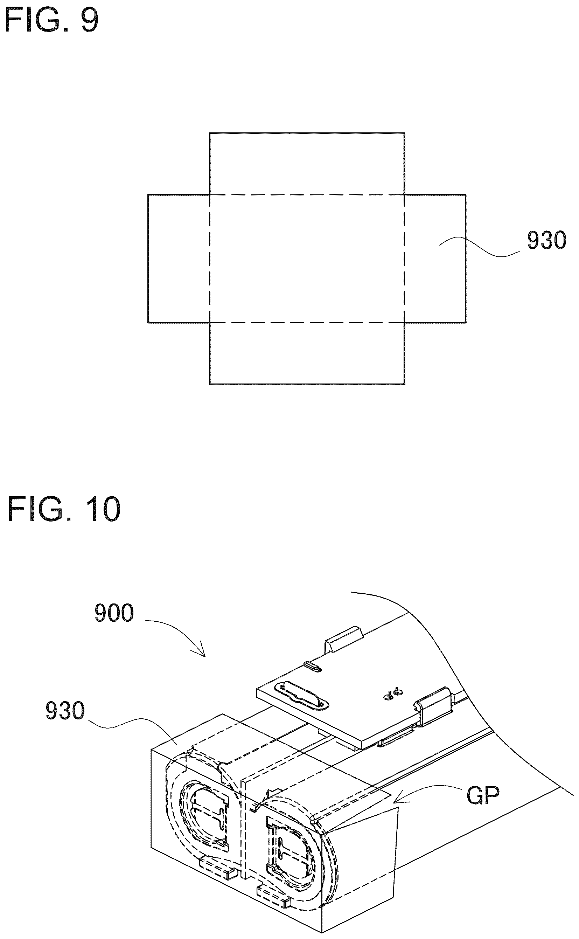

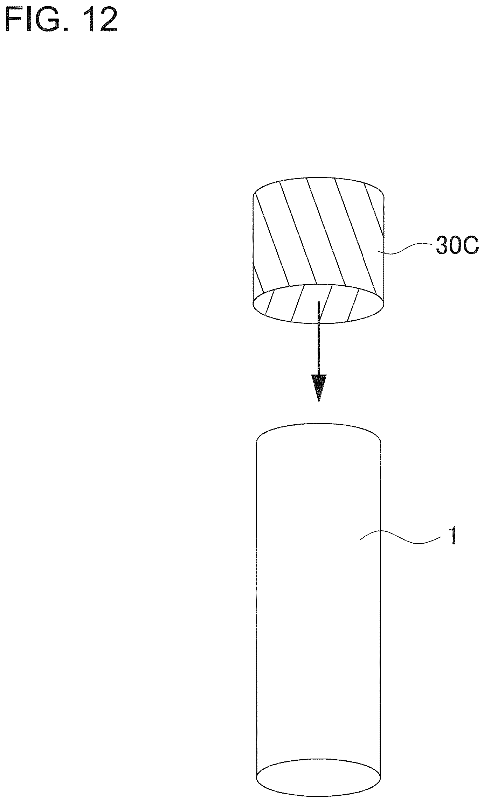

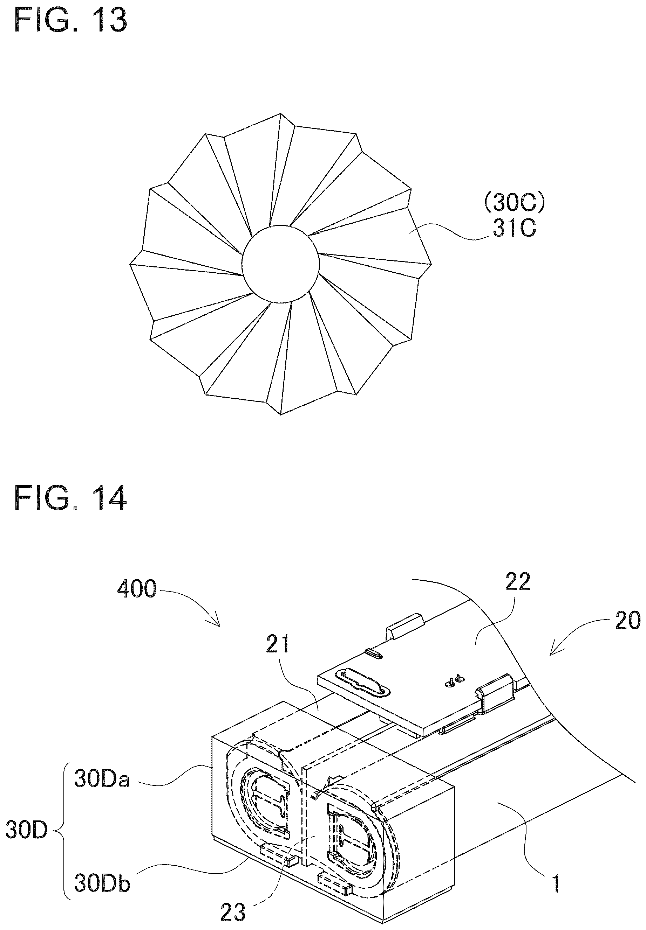

The flame-retardant paper 31 is folded into the flame-retardant material 30 having a bottom and side faces with one end opened. For example, as shown in FIG. 3, the flame-retardant paper 31 is formed into a box with a rectangular bottom face. Alternatively, as shown in FIGs. 12, 13, etc., which are described later, the flame-retardant paper 31 is formed into a bottomed tube with a circular bottom face. Such flame-retardant paper 31 is in the form of a sheet without any cuts at least between the side faces of the flame-retardant material 30 in an unfolded state. For example, as in a battery pack 900 according to Comparative Example 2 shown in FIGs. 9 and 10, in a flame-retardant material 930 having a cross shape in an unfolded view, a cut GP is formed on the side face of the flame-retardant material 930, which may lead to leakage of flames through a gap of this cut GP. Thus, gaps need to be prevented at least between the side faces of the flame-retardant material 930. Preferably, as shown in FIGs. 3 to 5, the flame-retardant material 30 is formed by folding a single sheet of the flame-retardant paper 31. With this method, the side faces of the flame-retardant material 30 are continuously formed without any gaps or cuts, thereby avoiding a situation of leakage of flames or the like in case of abnormality in the secondary battery cell 1. In particular, when high-temperature and high-pressure gas is released from an end face of the secondary battery cell 1, it is considered that the thermal energy reflected by the flame-retardant material 30 is directed toward the side face, etc. of the secondary battery cell 1, whereas folding and overlapping the flame-retardant paper 31 seamlessly can reduce the risk of the refracted thermal energy being released to the outside.

The flame-retardant paper 31 is formed from a material having flame retardance or non-combustibility. Further, the flame retardance may be added or enhanced by forming the flame-retardant paper into a multilayer structure or by applying surface coating. For example, by bonding a highly flame-retardant and elastic base material such as an aluminum sheet to one side of the flame-retardant paper 31 using double-sided tape or the like, it is possible to further improve moldability and flame retardance.

The flame retardance of the flame-retardant paper 31 is preferably rated V-0 or higher based on the flame retardant grades according to UL94 standard. Examples of such the flame-retardant paper 31 include ThermaVolt (trade name) manufactured by 3M, incombustible paper (GP18) manufactured by Tigerex, and the like.

The flame-retardant paper 31 is held at a fixed position on the inner face of the outer case 10 by aligning its outer shape with the inner face shape of the outer case 10 to a certain degree, or by providing securing ribs for setting the position of the flame-retardant paper 31 on the inner face of the outer case 10. Alternatively, the flame-retardant paper may also be held by being sandwiched by the inner face of the outer case and a secondary battery cell or the like. With such a configuration, the flame-retardant paper 31 can be held in a predetermined position without using adhesives, double-sided tape, and the like. As a result, it is possible to avoid a situation in which the flame-retardant paper 31 becomes displaced due to vibrations or the like. However, the present disclosure is not limited to this configuration, and the flame-retardant paper 31 may be adhered to the inner face of the outer case 10 using double-sided tapes, adhesives, or the like.

### [EMBODIMENT 2]

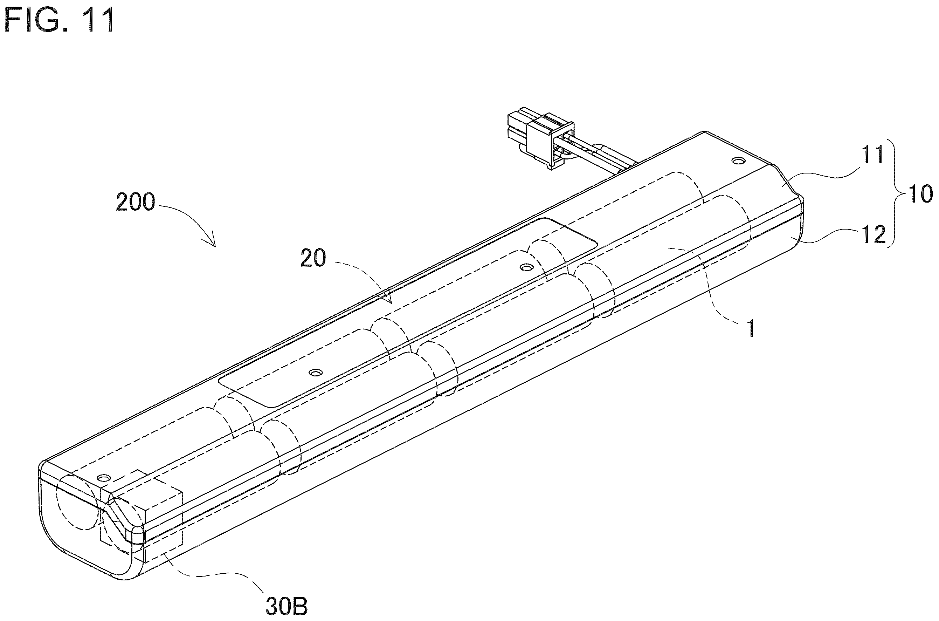

Further, compared to fire-resistant caps formed by resin molding, forming the flame-retardant material 30 by folding the flame-retardant paper 31 provides the advantage of flexible adaptability to various types of secondary battery cells 1. For example, in Embodiment 1 described above, an example has been described in which the end faces and the side faces of two secondary battery cells 1 are covered with the flame-retardant material 30. However, the present disclosure is not limited to this configuration, and it may also be configured to cover three or more secondary battery cells or only one secondary battery cell. A battery pack 200 shown in the perspective view of FIG. 11 as Embodiment 2 shows an example in which only one secondary battery cell 1 is covered with a flame-retardant material 30B. In Embodiment 2, the same members as those described above in Embodiment 1 are given the same reference numbers and detailed descriptions are omitted as appropriate.

For example, when the secondary battery cells 1 are disposed with their positive electrodes aligned on the same flat plane, it is preferable to use the flame-retardant material 30 shown in FIG. 2. On the other hand, when the secondary battery cells 1 are disposed with a positive electrode and a negative electrode adjacent to each other, it is sufficient to dispose the flame-retardant material 30B so as to cover only the positive electrode side, as shown in FIG. 11. In general, since flames are released from the end face of the secondary battery cell 1 where the gas discharge port is provided, which is the positive electrode side in many cases, it is sufficient to cover only the positive electrode side with the flame-retardant material 30B. In other words, according to the present embodiment, it is possible to flexibly dispose the flame-retardant material at appropriate locations to cover areas other than the negative electrode side, which is less required to be covered.

### [EMBODIMENT 3]

In the above examples, the flame-retardant materials 30 and 30B have a rectangular bottom face; however, the present disclosure is not limited to this configuration. The bottom face of the flame-retardant material may also have a polygonal shape such as a hexagon or octagon, or a circular shape. One such example is shown in FIGs. 12 and 13 as a flame-retardant material 30C of a battery pack according to Embodiment 3. In these figures, FIG. 12 is an exploded perspective view showing a state where a secondary battery cell is covered with the flame-retardant material 30C in the battery pack according to Embodiment 3, and FIG. 13 is an unfolded view of the flame-retardant paper 31C of FIG. 12. Also in the battery pack according to Embodiment 3, the same members as those described above in Embodiment 1, etc. are given the same reference numbers and detailed descriptions are omitted as appropriate. In particular, illustration of the battery module and the outer case is omitted since the same components as those in Embodiment 1, etc., may be used.

The flame-retardant material 30C shown in FIG. 12 is formed into a bottomed tube. Further, in the unfolded state, as shown in FIG. 13, the sheet material is formed into a circular shape, so that the end face of the secondary battery cell 1 contacts the center of the circular sheet material, and the sheet is folded in a spiral manner to cover the side face of the secondary battery cell 1. This spiral folding structure is expected to alleviate material damage caused by thermal energy even if high-temperature and high-pressure gas is released from the secondary battery cell 1. In addition, since the flame-retardant paper 31C can be folded to follow the outer shape of the cylindrical secondary battery cell 1 from its end face to the side face, it is possible to cover the secondary battery cell with minimal gaps, thereby suppressing generation of a dead space. Note that, instead of forming a box or tube by previously providing folding lines in the flame-retardant paper 31, flame-retardant paper without folding lines may be molded to be fitted to the actual secondary battery cell or inner face of the outer case.

### [EMBODIMENT 4]

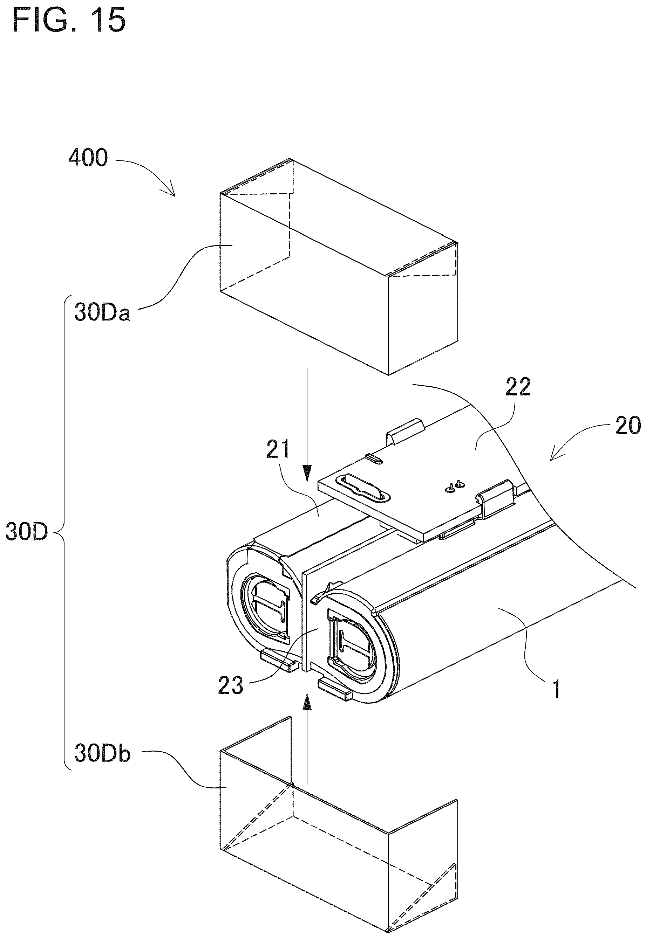

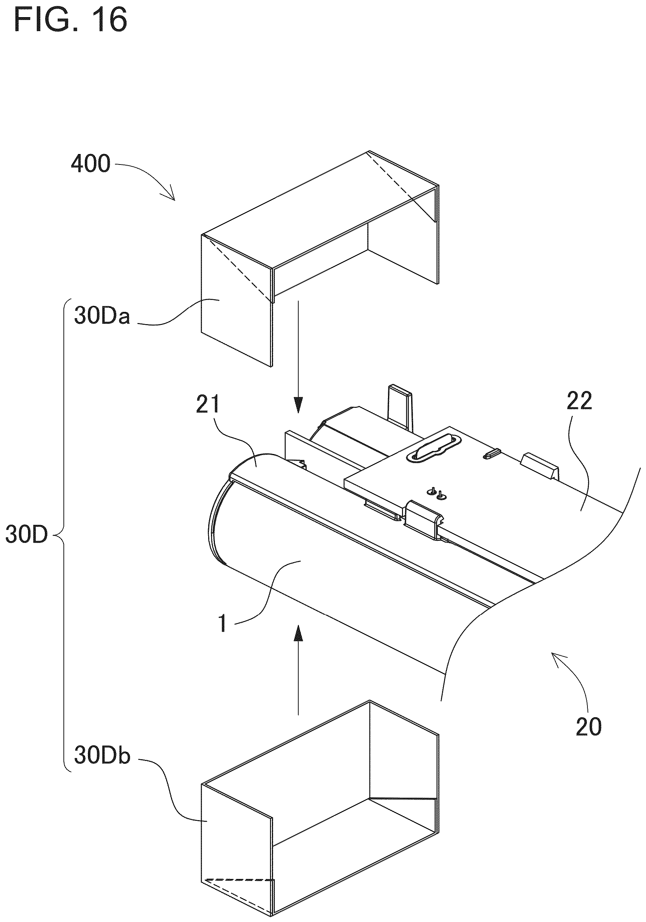

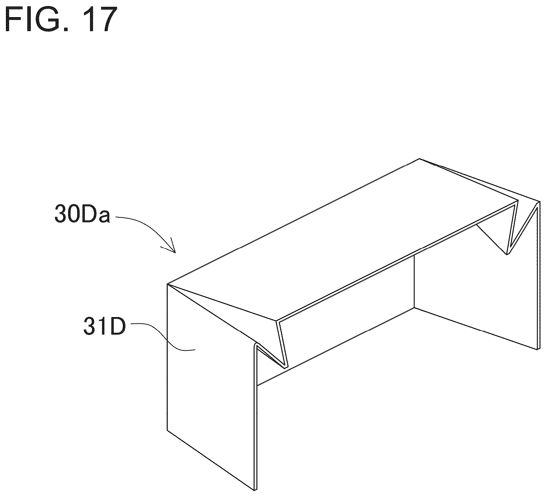

The above examples in which the flame-retardant material is formed from a single piece of flame-retardant paper have been described; however, the present disclosure is not limited to this configuration, and a single flame-retardant material may be formed from a plurality of flame-retardant papers. FIGs. 14 to 17 illustrate such an example as a battery pack 400 according to Embodiment 4. In these figures, FIG. 14 is a perspective view of the battery pack 400 according to Embodiment 4, FIG. 15 is an exploded perspective view of the battery pack 400 of FIG. 14, FIG. 16 is an exploded perspective view of the battery pack 400 of FIG. 15 viewed from the back, and FIG. 17 is a perspective view showing a folding method for flame-retardant paper 31D of FIG. 16. Also in the battery pack 400 according to Embodiment 4, the same members as those described above in Embodiment 1, etc. are given the same reference numbers and detailed descriptions are omitted as appropriate.

As shown in FIG. 15, in the battery pack 400 according to Embodiment 4, the flame-retardant material 30D is formed by being divided into two parts, i.e., an upper part 30Da and a lower part 30Db, which are combined. In this embodiment, the flame-retardant material 30D formed into a box is divided into upper and lower parts, and their end faces and side faces are overlapped. The two faces (on the sides of the bottom face and the front face in FIG. 16) of the upper part 30Da and the two faces (on the sides of the top face and the front face in FIG. 16) of the lower part 30Db are open while either the upper part 30Da or the lower part 30Db is formed one size larger than the other, so that they can be stacked vertically to cover the end faces of the two secondary battery cells 1, as shown in FIG. 14. In the example of FIG. 16, the upper part 30Da is formed one size larger than the lower part 30Db. However, the present disclosure is not limited to this configuration, and the lower part may be formed one size larger than the upper part. Further, as shown in FIG. 17, both the upper part 30Da and the lower part 30Db are formed into a box with two open faces by folding the boundary portions between the side faces.

### [EMBODIMENT 5]

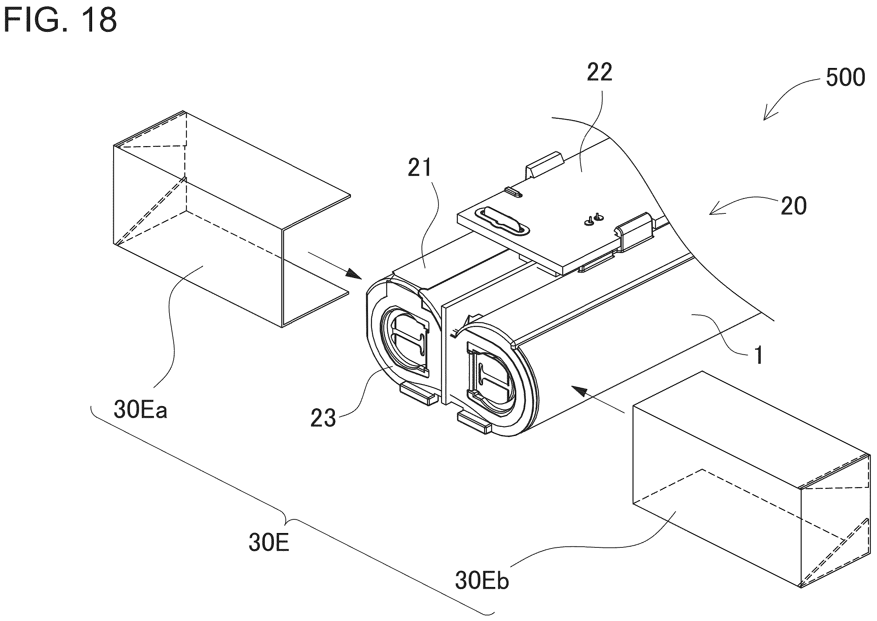

Further, although the example of Embodiment 4 in which the flame-retardant material 30D is vertically divided into upper and lower parts has been described, the present disclosure is not limited to this configuration, and the flame-retardant material 30D may instead be divided into left and right parts. The perspective view of FIG. 18 illustrates such an example as a battery pack 500 according to Embodiment 5. Again, in this figure, the same members as those described above in Embodiment 1, etc. are given the same reference numbers and detailed descriptions are omitted as appropriate. In the example of FIG. 18, a flame-retardant material 30E is divided into two parts, i.e., left and right parts, and includes a left part 30Ea and a right part 30Eb. The two faces (on the sides of the rear face and the right face in FIG. 18) of the left part 30Ea and the two faces (on the sides of the rear face and the left face in FIG. 18) of the right part 30Eb are open, and these left and right parts 30Ea and 30Eb sandwich two secondary battery cells 1 from the left and right sides. As a result, the end faces and upper and lower side faces of the secondary battery cells 1 can be protected respectively with two overlapping layers of the flame-retardant paper 31D. Also for such a configuration, the flame-retardant material 30 can be formed by folding a flame-retardant sheet in a similar manner. Further, changing the combining direction of the flame-retardant material can increase the degree of freedom in assembling operations during assembly.

Note that, in the above examples, the boundary portions between the side faces of the flame-retardant material are folded to partially form two-layered portions of the flame-retardant paper. However, such partial two-layered portions may alternatively be formed, for example, by folding back the open ends of the flame-retardant material.

### (Method for Manufacturing Battery Pack)

A method for manufacturing such a battery pack including one or more secondary battery cells 1 and the outer case 10 is described below. First, the flame-retardant paper 31 without any cuts is folded to cover one of the one or more secondary battery cells 1 from the end face to the side face thereof and partially double-overlap and cover at least the side face. Then, the one or more secondary battery cells 1 are stored in the outer case 10. With this configuration, instead of using the expensive flame-retardant fire-resistant resin cap, the inexpensive flame-retardant paper 31 is folded to cover the secondary battery cells, which can suppress leakage of flames to the outside of the outer case 10 even in the event that the secondary battery cells 1 catch fire.

In the above examples, the battery pack is attached to the electrical device to be driven to supply power to the device. Additionally, when the remaining capacity of the battery pack is low or when the battery pack deteriorates over time, the battery pack can be replaced so that the electrical device remains usable. However, the battery pack of the present disclosure is not limited to a replaceable battery pack that typically stores secondary battery cells. The present disclosure is also applicable to embodiments in which secondary battery cells are stored within a housing of an electrical device. In the present disclosure, it is sufficient that a battery pack refers to the one in which secondary battery cells are stored in a case, and thus the one in which secondary battery cells for driving are built into a housing of an electrical device itself is also referred to as a battery pack. In other words, the present disclosure is not limited to replaceable battery packs, and is also applicable to electrical devices with built-in secondary battery cells.

### INDUSTRIAL APPLICABILITY

The battery pack according to the present disclosure can be suitably used as a power supply device for a mobile body, such as an assist bicycle or an electric cart. In addition, the battery pack according to the present disclosure can also be suitably used for applications including a power supply for portable electrical devices, such as electric cleaners and electric tools.

### REFERENCE SIGNS LIST

- 100, 200, 400, 500, 800, 900: battery pack

- 1: secondary battery cell
- 10: outer case
- 11: upper case
- 12: lower case
- 20: battery module
- 21: battery holder
- 22: circuit board
- 23: lead plate
- 30, 30B, 30C, 30D: flame-retardant material
- 30Da: upper part; 30Db ... lower part; 30Ea ... left part; 30Eb ... right part
- 31, 31C, 31D: flame-retardant paper
- 700: ... battery pack
- 701: secondary battery cell
- 702: gas discharge port
- 710: outer case
- 800: battery pack
- 801: secondary battery cell
- 810: outer case
- 830: fire-resistant cap
- 900: battery pack
- 930: flame-retardant material
- GP: cut

## Claims

1. A battery pack comprising:
one or more secondary battery cells;
an outer case that stores the one or more secondary battery cells; and
a flame-retardant material interposed between the outer case and an end face of a secondary battery cell,
wherein
the flame-retardant material is provided so that flame-retardant paper is folded to cover the secondary battery cell from an end face to a side face of the secondary battery cell and partially double-overlap at least the side face.

2. The battery pack as recited in claim 1, wherein the flame-retardant paper protects at least a corner between the end face and the side face of the secondary battery cell with two or more overlapping layers.

3. The battery pack as recited in claim 1, wherein
the flame-retardant paper is folded into a flame-retardant material having a bottom and side faces with one end opened, and
no gaps are present at least between the side faces of the flame-retardant material.

4. The battery pack as recited in claim 1, wherein the flame-retardant paper protects the side face of the secondary battery cell with three overlapping layers at least partially.

5. The battery pack as recited in claim 1, wherein the secondary battery cell includes a gas discharge port, which opens in response to an increase in internal pressure, at least on one end face.

6. The battery pack as recited in claim 5, wherein
the secondary battery cell includes the gas discharge port on a positive electrode side, and
the flame-retardant paper covers an end face on the positive electrode side of the secondary battery cell.

7. The battery pack as recited in any one of claims 1 to 6, wherein the flame-retardant paper is adhered to an inner face of the outer case.

8. The battery pack as recited in any one of claims 1 to 6, wherein each of the one or more secondary battery cells has a cylindrical outer can.

9. A method for manufacturing a battery pack, the battery pack comprising:
one or more secondary battery cells; and
an outer case that stores the one or more secondary battery cells, the method comprising:
a step of folding flame-retardant paper to cover one of the one or more secondary battery cells from an end face to a side face of the secondary battery cell and partially double-overlap at least the side face; and
a step of storing the one or more secondary battery cells in the outer case.

10. The method for manufacturing a battery pack as recited in claim 9, wherein, the flame-retardant paper has a sheet shape with no cuts at least at each corner between the end face and the side face of the secondary battery cell in an unfolded state.
